# EUROPEAN PATENT APPLICATION

(11) **EP 2 555 476 A1**
(43) Date of publication of application: **06.02.2013**
(21) Application number: 11762012.0
(22) Date of filing: 31.03.2011
(51) Int. Cl.: H04L 12/56, H04L 12/18, H04L 12/26

(54) **METHOD, SYSTEM AND DEVICE FOR PROTECTING MULTICAST IN COMMUNICATION NETWORK**

(30) Priority: 02.04.2010 CN 201010139837
(71) Applicant: Huawei Technologies Co., Ltd., Shenzhen, Guangdong 518129 (CN)
(72) Inventor: PU, Yun, Shenzhen Guangdong 518129 (CN); LUO, Yong, Shenzhen Guangdong 518129 (CN); HUANG, Xinglin, Shenzhen Guangdong 518129 (CN)
(74) Representative: Lord, Michael
(86) International application number: PCT/CN2011/072331
(87) International publication number: WO 2011/120438

(57) **Abstract**

The present invention discloses a method, a system, and a device for protecting multicast in a communication network. The technical solution of the present invention is: In a communication multicast network, a main node and a backup node serve as root nodes to generate two multicast trees simultaneously; the multicast tree that uses the backup node as a root node is set to be in a silent state; when the network is faulty, and the current main multicast tree is unable to forward multicast packets to all leaf nodes in the multicast tree, the silent state of the backup multicast tree is canceled and the backup multicast tree starts forwarding the multicast packets. In this way, when the network is faulty, the backup multicast tree quickly takes over the task of forwarding the multicast packets without requiring the generation of a new network topology and the generation of a new multicast tree, which quickens the recovery of the multicast service significantly and improves the user experience.

## Description

### FIELD OF THE INVENTION

The present invention relates to the field of network technologies, and in particular, to a method, a system, and a device for protecting multicast in a communication network.

### BACKGROUND OF THE INVENTION

The multicast technology effectively solves the problem of single-point transmitting and multi-point receiving, and implements point-to-multipoint high-efficiently data transfer in a network, thereby saving the network bandwidth and reducing the network load significantly. The multicast feature of the network may be used to provide new value-added services more conveniently.

In typical multicast forwarding, an Internet Group Multicast Protocol (IGMP, Internet Group Multicast Protocol) is generally used to set up and maintain a multicast membership between a host and a router or a broadband remote access server (BRAS, Broadband Remote Access Server). Meanwhile, a multicast routing protocol runs between multicast routers, where the multicast routing protocol is used to set up and maintain multicast routing and forward multicast data packets correctly and efficiently. In this way, all users joining in a multicast group can receive multicast service streams.

As the multicast technology is applied more and more widely, increasingly higher requirements are imposed on the multicast technology. Especially, reliability protection of multicast services in the case of network faults has aroused great interest.

When a link in the network is faulty, main multicast protection technologies in the prior art are to regenerate a network topology through a Spanning Tree Protocol, a Rapid Spanning Tree Protocol, or a Multiple Spanning Tree Protocol, and regenerate a new multicast tree through IGMP in the new network topology, so as to forward multicast packets.

As a way of detecting a link fault in the prior art, an operation and maintenance (OAM, Operation and Maintenance) server is configured on the network to detect a specific link as follows. A source node sends an advertisement packet to a sink node located at the other end of the link; the sink node receives the advertisement packet and detects whether the packet is received normally; if the sink node finds that the advertisement packet sent by the source node is not received normally in several periods, the link is detected to be faulty.

However, when a link in the network is faulty, the generation of a new multicast tree must depend on the generation of a new network topology. As such, it takes a long time to recover the multicast service and the user experience is deteriorated.

### SUMMARY OF THE INVENTION

Embodiments of the present invention provide a method, a system, and a device for protecting multicast in a communication network.

A method for protecting multicast in a communication network includes:
setting a multicast tree to be in a silent state, where the multicast tree is generated by a backup node according to a received multicast protocol packet sent from each node in a network;
detecting a network fault by detecting whether detection information is received from a main node or a multicast source; and
canceling the silent state of the multicast tree when a network fault is detected.

A system for protecting multicast in a communication network includes:
a main node, configured to send an advertisement packet to a backup node regularly through a multicast source and a ring network respectively;
the multicast source, configured to send an advertisement packet to the backup node regularly; and
the backup node, configured to: receive a multicast protocol packet, generate a multicast tree according to the multicast protocol packet, and set the multicast tree to be in a silent state; and
detect a network fault by detecting whether the advertisement packet is received from the main node or the multicast source, and cancel the silent state of the multicast tree when a network fault is detected.

A system for protecting multicast in a communication network includes:
a main node, configured to send link state information to a backup node regularly, and send an advertisement packet to the backup node through a ring network regularly; and
the backup node, configured to: receive a multicast protocol packet, generate a multicast tree according to the multicast protocol packet, and set the multicast tree to be in a silent state; and
detect a network fault by detecting whether the link state information or the advertisement packet is received from the main node, and cancel the silent state of the multicast tree when a network fault is detected.

A backup network node device includes:
a silence setting module, configured to set a multicast tree to be in a silent state, where the multicast tree is generated by a backup node according to a received multicast protocol packet sent from each node in a network;
a detecting module, configured to detect a network fault by detecting whether detection information is received from a main node or a multicast source; and
a silence canceling module, configured to cancel the silent state of the multicast tree when a network fault is detected.

In the embodiments of the present invention, the backup node generates the backup multicast tree, and sets the multicast tree to be in a silent state; when the network is faulty and the current multicast tree fails to forward multicast packets, the silent state of the backup multicast tree is canceled, and the backup multicast tree starts forwarding the multicast packets. In this way, when the network is faulty, the backup multicast tree quickly takes over the task of forwarding the multicast packets without requiring the generation of a new network topology and the generation of a new multicast tree, which quickens the recovery of the multicast service significantly and improves the user experience.

### BRIEF DESCRIPTION OF THE DRAWINGS

FIG. 1 is a data flowchart of a method for protecting multicast in a communication network;

FIG. 2 is a logical structural diagram of a system for protecting multicast in a communication network;

FIG. 3 is a logical structural diagram of a backup network node device;

FIG. 4 is a structural diagram of a topology of a multicast virtual local area network;

FIG. 5 is a schematic diagram of a multicast packet of a multicast virtual local area network; and

FIG. 6 is a schematic diagram of a multicast packet when a link fault occurs in a ring network of a multicast virtual local area network.

### DETAILED DESCRIPTION OF THE EMBODIMENTS

Embodiments of the present invention provide a method for protecting multicast in a communication network, and also provide a system and a device for protecting multicast in the communication network, which are hereinafter described in detail.

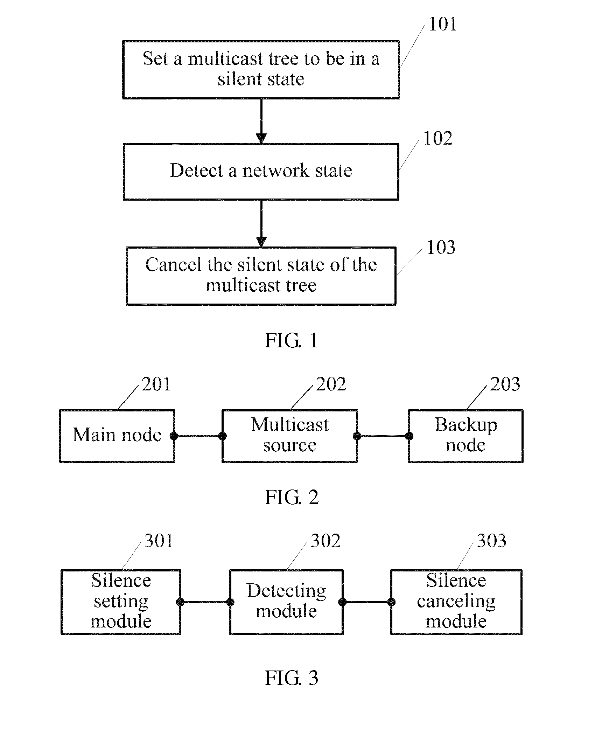

As shown in FIG. 1, a method for protecting multicast in a communication network according to a first embodiment of the present invention includes the following:

101: Set a multicast tree to be in a silent state.

A backup node receives a multicast protocol packet sent by other nodes in a network, generates a multicast tree according to the received multicast protocol packet, and sets the generated multicast tree to be in a silent state. That is, after receiving a multicast packet from a multicast source, the backup node discards the multicast packet instead of sending it downward.

102: Detect a network state.

Detect a network fault by detecting whether detection information is received from a main node or the multicast source. The detection information received by the backup node may be an advertisement packet or link state information. The link state information is state information of a link between the main node and the multicast source.

According to the difference of the received detection information, the process in which the backup node detects the network state differs. Specifically:

When two OAMs are configured in the network, one OAM detects a link state of a ring network, and the other OAM detects a state of a link from the main node through the multicast source to the backup node. In this case, the main node sends an advertisement packet to the backup node regularly through the ring network and the multicast source. The multicast source sends an advertisement packet to the backup node directly and regularly.

Detect whether the advertisement packet sent by the main node through the multicast source is received normally, and whether the advertisement packet sent by the multicast source directly is received normally. Determine that the main node is faulty or the link between the main node and the multicast source is faulty if it is detected that the advertisement packet sent by the multicast source directly is received normally but the advertisement packet sent by the main node through the multicast source is not received.

Detect whether the advertisement packet sent by the main node through the ring network is received normally. Determine that a ring network link from the backup node to the main node is faulty if it is detected that the advertisement packet sent by the main node through the ring network is not received.

Or

When one OAM is configured in the network to detect a link state of the ring network, and the main node sends link state information to the backup node regularly to detect a state of the link between the main node and the multicast source. In this case, the main node regularly sends an advertisement packet to the backup node through the ring network, and regularly sends the link state information to the backup node. The link state information may be forwarded by the multicast source or the ring network link between the main node and the backup node, or may be sent directly by a direct link between the main node and the backup node.

Detect the link state information. Determine that the link between the main node and the multicast source is faulty if the link state information is received normally and the received link state information shows a link fault; and determine that the main node is faulty if it is detected that no link state information is received.

Alternatively, detect whether the advertisement packet sent by the main node through the ring network is received normally. Determine that the ring network link from the backup node to the main node is faulty if it is detected that the advertisement packet sent by the main node through the ring network is not received.

103: Cancel the silent state of the multicast tree.

When the backup node detects that the main node is faulty, that the link between the main node and the multicast source is faulty, or that the ring network link from the backup node to the main node is faulty, the backup node cancels the silent state of the multicast tree, that is, when receiving a multicast packet sent from the multicast source, the backup node sends the multicast packet downward to all leaf nodes in the multicast tree that uses the backup node as a root node.

In this embodiment, the backup node generates a multicast tree in the silent state, and detects the network link state. When the network is faulty and the current main multicast tree is unable to forward the multicast packets to all leaf nodes in the multicast tree, the silent state of the backup multicast tree is canceled and the backup multicast tree starts forwarding the multicast packets. In this way, when the network is faulty, the backup multicast tree quickly takes over the task of forwarding the multicast packets without requiring the generation of a new network topology and the generation of a new multicast tree, which quickens recovery of the multicast service significantly and improves the user experience.

As shown in FIG. 2, a system for protecting multicast in a communication network according to a second embodiment of the present invention includes:
a main node 201, configured to send an advertisement packet to a backup node 203 regularly through a multicast source and a ring network respectively;
the multicast source 202, configured to send an advertisement packet to the backup node 203 regularly through a direct link between the multicast source and the backup node, and receive a multicast protocol packet sent by the backup node; and
the backup node 203, configured to: receive the multicast protocol packet, generate a multicast tree according to the received multicast protocol packet, send the multicast protocol packet to the multicast source, and set the generated multicast tree to be in a silent state, that is, after receiving a multicast packet sent from the multicast source 202, the backup node 203 discards the multicast packet instead of sending it downward; and
detect a network fault by detecting whether the advertisement packet sent from the main node 201 or multicast source 202 is received:
   if it is detected that the advertisement packet sent directly by the multicast source 202 is received normally, but the advertisement packet sent by the main node 201 through the multicast source 202 is not received, determine that the main node 201 is faulty or that a link between the main node 201 and the multicast source 202 is faulty, and cancel the silent state of the silent multicast tree, that is, after receiving a multicast packet sent by the multicast source 202, the backup node 203 sends the multicast packet downward to all leaf nodes in the multicast tree that uses the backup node as a root node; and
   if it is detected that the advertisement packet sent by the main node 201 through the ring network is not received, determine that a ring network link from the backup node to the main node 201 is faulty, and cancel the silent state of the silent multicast tree, that is, after receiving a multicast packet sent by the multicast source 202, the backup node 203 sends the multicast packet downward to all leaf nodes in the multicast tree that uses the backup node as a root node.

In this embodiment, the main node and the multicast source send the advertisement packets to the backup node regularly; the backup node generates a multicast tree, sets the multicast tree to be in a silent state, receives the advertisement packets, and detects the network link state by detecting whether the advertisement packets are received normally. When the network is faulty and the current main multicast tree is unable to forward the multicast packets, the silent state of the backup multicast tree is canceled and the backup multicast tree starts forwarding the multicast packets. In this way, when the virtual local area network is faulty, the backup multicast tree quickly takes over the task of forwarding the multicast packets without requiring the generation of a new network topology and the generation of a new multicast tree, which quickens recovery of the multicast service significantly and improves the user experience.

A system for protecting multicast in a communication network according to a third embodiment of the present invention includes:
a main node, configured to: regularly send link state information to a backup node through a multicast source, a ring network link between the main node and the backup node, or a direct link between the main node and the backup node, where the link state information is state information of a link between the main node and the multicast source; and send an advertisement packet to the backup node regularly through a ring network; and
the backup node, configured to: receive a multicast protocol packet sent by other nodes in a network, generate a multicast tree according to the received multicast protocol packet, send the multicast protocol packet to the multicast source, and set the generated multicast tree to be in a silent state, that is, after receiving a multicast packet sent by the multicast source, the backup node discards the multicast packet instead of sending it downward; and
detect a network fault by detecting whether the link state information or the advertisement packet sent by the main node is received:
   if it is detected that the link state information sent by the main node is received normally, and the link between the main node and the multicast source is determined to be faulty according to the received link state information, determine that the link between the main node and the multicast source is faulty; or if it is detected that no link state information is received, determine that the main node is faulty, and cancel the silent state of the silent multicast tree, that is, when receiving a multicast packet sent by the multicast source, the backup node sends the multicast packet downward to all leaf nodes in the multicast tree that uses the backup node as a root node; and
   if it is detected that the advertisement packet sent by the main node through the ring network is not received, determine that the ring network link from the backup node to the main node is faulty, and cancel the silent state of the silent multicast tree, that is, after receiving a multicast packet sent by the multicast source, the backup node sends the multicast packet downward to all leaf nodes in the multicast tree that uses the backup node as a root node.

In this embodiment, the main node sends the advertisement packets or the link state information to the backup node regularly; the backup node generates a multicast tree, sets the multicast tree to be in a silent state, receives the advertisement packets, and detects the link state of the virtual local area network by detecting whether the advertisement packets or link state information is received normally. When the network is faulty and the current main multicast tree is unable to forward the multicast packets to all leaf nodes in the multicast tree, the silent state of the backup multicast tree is canceled and the backup multicast tree starts forwarding the multicast packets. In this way, when the network is faulty, the backup multicast tree quickly takes over the task of forwarding the multicast packets without requiring the generation of a new network topology and the generation of a new multicast tree, which quickens recovery of the multicast service significantly and improves the user experience.

As shown in FIG. 3, a backup network node device according to a fourth embodiment of the present invention includes a silence setting module 301, a detecting module 302, and a silence canceling module 303.

The silence setting module 301 is configured to set a multicast tree to be in a silent state, where the multicast tree is generated by a backup node according to a received multicast protocol packet sent from each node in a network, that is, after receiving a multicast packet sent by a multicast source, the backup node discards the multicast packet instead of sending it downward.

The detecting module 302 is configured to detect a network fault by detecting whether detection information is received from a main node, where the detection information may be an advertisement packet or link state information. Depending on the difference of the received detection information, the detection process differs. Specifically:

When receiving an advertisement packet sent by the main node through a ring network or a multicast source, or an advertisement packet sent by the multicast source directly, the detecting module 302 is configured to:
detect whether the advertisement packet sent by the main node through the multicast source is received normally, and whether the advertisement packet sent by the multicast source directly is received normally; and determine that the main node is faulty or that a link between the main node and the multicast source is faulty if it is detected that the advertisement packet sent by the multicast source directly is received normally but the advertisement packet sent by the main node through the multicast source is not received; and
detect whether the advertisement packet sent by the main node through the ring network is received normally; and determine that a ring network link from the backup node to the main node is faulty if it is detected that the advertisement packet sent by the main node through the ring network is not received.

Or when receiving link state information sent by the main node, or an advertisement packet sent by the main node through a ring network, the detecting module 302 is configured to:
detect the link state information; and determine that a link between the main node and the multicast source is faulty if the link state information shows a link fault; or determine that the main node is faulty if it is detected that no link state information is received; and
detect whether the advertisement packet sent by the main node through the ring network is received normally; and determine that a ring network link from the backup node to the main node is faulty if it is detected that the advertisement packet sent by the main node through the ring network is not received.

The silence canceling module 303 is configured to cancel the silent state of the multicast tree when the detecting module 302 detects a network fault, that is, when receiving a multicast packet sent from the multicast source, the backup node sends the multicast packet downward to all leaf nodes in the multicast tree that uses the backup node as a root node.

It should be noted that the multicast service on the direct link between the main node and the backup node needs to be blocked, namely, a port at either end of the direct link needs to be set to be in a block state. Therefore, when the main node does not block a port on the direct link between the main node and the backup node, the backup node needs to block a port on the direct link between the backup node and the main node, namely, the backup node is unable to send data packets to the main node through the blocked port, and discards data packets sent by the main node and received from the blocked port. In this case, a blocking module exists before the silence setting module 301.

The blocking module is configured to block a port on a direct link between the backup node and a neighboring main node.

In this embodiment, the backup node generates a multicast tree in the silent state, and detects the network link state. When the network is faulty and the current main multicast tree is unable to forward multicast packets, the silent state of the backup multicast tree is canceled and the backup multicast tree starts forwarding the multicast packets. In this way, when the network is faulty, the backup multicast tree quickly takes over the task of forwarding the multicast packets without requiring the generation of a new network topology or the generation of a new multicast tree, which quickens recovery of the multicast service significantly.

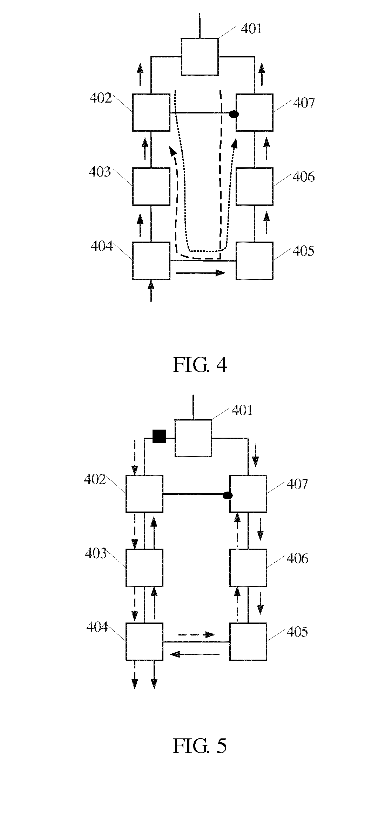

Referring to FIG. 4 to FIG. 6, the technical solution is described in detail below with reference to an application example.

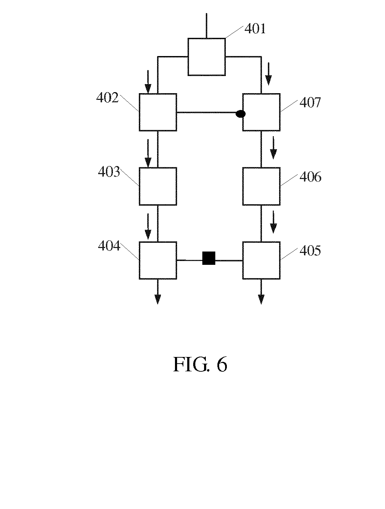

FIG. 4, FIG. 5, and FIG. 6 are schematic diagrams of the same multicast virtual local area network in different time segments. FIG. 4 is a schematic diagram of generating two multicast trees in the multicast virtual local area network; FIG. 5 is a schematic diagram of forwarding packets when the multicast virtual local area network is in a normal state and when a link between a node 402 and a multicast source 401 is faulty; and FIG. 6 is a schematic diagram of forwarding packets when a ring network link of the multicast virtual local area network is faulty. The multicast virtual local area network includes the multicast source 401 and nodes 402, 403, 404, 405, 406, and 407. Ring ports of all nodes and a ring port of the multicast source join in the multicast virtual local area network. As shown by a black circle in the figure, the backup node 407 blocks a port between the backup node and the main node 402. That is, the backup node 407 is unable to send data packets to the main node 402 through the blocked port, and discards data packets sent by the main node 402 and received from the blocked port.

Each node on the ring sends IGMP packets in two directions on the ring by means of broadcast. As shown by arrows in FIG. 4, the node 404 sends, through two ring ports, an IGMP packet received through a user port in two directions on the ring by means of broadcast. As shown by dotted lines in FIG. 4, after receiving the IGMP packet, the main node 402 generates a multicast tree according to the received IGMP packet by using the main node as a root node, the backup node 407 generates a multicast tree according to the received IGMP packet by using the backup node as a root node, and the backup node 407 sets the multicast tree that uses the backup node as a root node to be in a silent state.

As shown by dotted arrows in FIG. 5, in a normal state, the main node 402 receives a multicast packet sent by the multicast source 401, and then forwards the multicast packet to all other leaf nodes in the multicast tree that uses the main node as a root node. After receiving the multicast packet, each leaf sends the multicast packet through the user port to each user, as shown by the dotted arrow under the node 404 in FIG. 5, where the node 404 is taken as an example.

Two Ethernet OAMs are configured in the multicast virtual local area network. One OAM detects a state of a ring network between the main node 402 and the backup node 407, and the other OAM detects a state of the network from the main node 402 through the multicast source 401 to the backup node 407.

The main node 402 sends an advertisement packet to the backup node regularly through the ring network and the multicast source. The multicast source 401 sends an advertisement packet to the backup node regularly. The backup node 407 receives the advertisement packet sent by the main node 402 through the multicast source 401 and the ring network, and the advertisement packet sent by the multicast source 401.

The backup node 407 detects whether the advertisement packet sent by the main node 402 through the multicast source 401 is received normally, and whether the advertisement packet sent by the multicast source 401 directly is received normally; and determines that the main node 402 is faulty or that a link between the main node 402 and the multicast source 401 is faulty if it is detected that the advertisement packet sent by the multicast source 401 directly is received normally but the advertisement packet sent by the main node 402 through the multicast source is not received, as shown by a black square in FIG. 5; in this case, the backup node 407 cancels the silent state of the multicast tree, that is, after receiving a multicast packet sent by the multicast source, the backup node sends the multicast packet downward to all leaf nodes in the multicast tree that uses the backup node as a root node, as shown by solid arrows in FIG. 5. After receiving the multicast packet, each leaf sends the multicast packet from the user port to each user, as shown by the solid arrow under the node 404 in FIG. 5, where the node 404 is taken as an example.

The backup node 407 detects whether the advertisement packet sent by the main node 402 through the ring network is received normally, and determines that a ring network link from the backup node 407 to the main node 402 is faulty if it is detected that the advertisement packet sent by the main node 402 through the ring network is not received, as shown by a black square in FIG. 6; in this case, the backup node 407 cancels the silent state of the multicast tree, that is, after receiving a multicast packet sent by the multicast source, the backup node sends the multicast packet downward to all leaf nodes in the multicast tree that uses the backup node as a root node. In this case, the two multicast trees forward the multicast packet simultaneously, as shown by arrows in FIG. 6. After receiving the multicast packet, each leaf sends the multicast packet from the user port to each user, as shown by the arrow under the node 404 in FIG. 6, where the node 404 and the node 405 are taken as an example.

In this application example, the backup node generates a multicast tree in the silent state, and detects the link state of the virtual local area network. When the virtual local area network is faulty and the current main multicast tree is unable to forward multicast packets, the silent state of the backup multicast tree is canceled and the backup multicast tree starts forwarding the multicast packets. In this way, when the virtual local area network is faulty, the backup multicast tree quickly takes over the task of forwarding the multicast packets without requiring the generation of a new network topology and the generation of a new multicast tree, which quickens recovery of the multicast service significantly and improves the user experience.

Persons of ordinary skill in the art should understand that all or a part of the steps of the methods in the embodiments may be implemented by a program instructing relevant hardware. The program may be stored in a computer readable storage medium, and the storage medium may be a read-only memory (ROM, Read Only Memory), a random access memory (RAM, Random Access Memory), a magnetic disk, or an optical disk.

The method, the system, and the device for protecting multicast in a communication network according to embodiments of the present invention are described in detail. Although the principle and implementation of the present invention are described with reference to specific embodiments, the embodiments are described for ease of the understanding of the method and core idea of the present invention. In addition, with respect to the implementation and applicability of the present invention, modifications and variations may be made by persons of ordinary skill in the art according to the idea of the present invention. Therefore, the specification shall not be construed as a limitation on the present invention.

## Claims

1. A method for protecting multicast in a communication network, comprising:
setting a multicast tree to be in a silent state, wherein the multicast tree is generated by a backup node according to a received multicast protocol packet sent from each node in a network;
detecting a network fault by detecting whether detection information is received from a main node or a multicast source; and
canceling the silent state of the multicast tree when a network fault is detected.

2. The method according to claim 1, wherein before the step of setting the multicast tree to be in a silent state, the method further comprises:
blocking, by the backup node, a port on a direct link between the backup node and the main node.

3. The method according to claim 1, wherein
the detection information is an advertisement packet or link state information, and the link state information is state information of a link between the main node and the multicast source.

4. The method according to claim 3, wherein the step of detecting the network fault by detecting whether the detection information sent from the main node or the multicast source is received comprises:
detecting whether the advertisement packet sent by the main node through the multicast source is received, and whether the advertisement packet sent by the multicast source directly is received; and determining that the main node is faulty or that the link between the main node and the multicast source is faulty if it is detected that the advertisement packet sent by the multicast source directly is received but the advertisement packet sent by the main node through the multicast source is not received;
detecting whether the link state information is received; and determining that the link between the main node and the multicast source is faulty if the link state information shows a link fault; or determining that the main node is faulty if it is detected that the link state information is not received; or
detecting whether the advertisement packet sent by the main node through a ring network is received; and determining that a ring network link from the backup node to the main node is faulty if it is detected that the advertisement packet sent by the main node through the ring network is not received.

5. A backup network node device, comprising:
a silence setting module, configured to set a multicast tree to be in a silent state, wherein the multicast tree is generated by a backup node according to a received multicast protocol packet sent from each node in a network;
a detecting module, configured to detect a network fault by detecting whether detection information is received from a main node or a multicast source; and
a silence canceling module, configured to cancel the silent state of the multicast tree when a network fault is detected.

6. The device according to claim 5, wherein before the silence setting module, the device further comprises:
a blocking module, configured to block a port on a direct link between the backup node and the main node.

7. The device according to claim 5, wherein the detecting module comprises:
a first detecting unit, configured to detect whether an advertisement packet sent by the main node through the multicast source is received, and whether an advertisement packet sent by the multicast source directly is received; and determine that the main node is faulty or that a link between the main node and the multicast source is faulty if it is detected that the advertisement packet sent by the multicast source directly is received but the advertisement packet sent by the main node through the multicast source is not received; and
a second detecting unit, configured to detect whether an advertisement packet sent by the main node through a ring network is received; and determine that a ring network link from the backup node to the main node is faulty if it is detected that the advertisement packet sent by the main node through the ring network is not received.

8. The device according to claim 7, wherein the first detecting unit is further configured to:
detect whether the link state information is received; and determine that the link between the main node and the multicast source is faulty if the link state information shows a link fault; or determine that the main node is faulty if it is detected that the link state information is not received.

9. A system for protecting multicast in a communication network, comprising:
a main node, configured to send an advertisement packet to a backup node regularly through a multicast source and a ring network respectively;
the multicast source, configured to send an advertisement packet to the backup node regularly; and
the backup node, configured to: receive a multicast protocol packet, generate a multicast tree according to the multicast protocol packet, and set the multicast tree to be in a silent state; and
detect a network fault by detecting whether the advertisement packet sent from the main node or the multicast source is received, and cancel the silent state of the multicast tree when a network fault is detected.

10. A system for protecting multicast in a communication network, comprising:
a main node, configured to send link state information to a backup node regularly, and send an advertisement packet to the backup node through a ring network regularly; and
the backup node, configured to: receive a multicast protocol packet, generate a multicast tree according to the multicast protocol packet, and set the multicast tree to be in a silent state; and detect a network fault by detecting whether the link state information or advertisement packet sent from the main node is received, and cancel the silent state of the multicast tree when a network fault is detected.
